# EUROPÄISCHE PATENTSCHRIFT

(11) **EP 3 935 345 B1**
(45) Veröffentlichungstag und Bekanntmachung des Hinweises auf die Patenterteilung: **06.09.2023**
(21) Anmeldenummer: 20717179.4
(22) Anmeldetag: 06.04.2020
(51) Int. Cl.: G01D 5/347

(54) **OPTISCHER ENCODER**
OPTICAL ENCODER
CODEUR OPTIQUE

(30) Priorität: 10.04.2019 DE 102019109469
(43) Veröffentlichungstag der Anmeldung: 12.01.2022
(73) Patentinhaber: Vishay Semiconductor GmbH, 74072 Heilbronn (DE)
(72) Erfinder: BURGER, Daniel, 74211 Leingarten (DE); KUHN, Sascha, 74229 Oedheim (DE); MÜHLECK, Peter, 74254 Offenau (DE); SCHAFF, Christina, 74193 Schwaigern (DE)
(74) Vertreter: Manitz Finsterwald Patent- und Rechtsanwaltspartnerschaft mbB
(86) Internationale Anmeldenummer: PCT/EP2020/059742
(87) Internationale Veröffentlichungsnummer: WO 2020/207959

(56) Entgegenhaltungen:
- EP-A2- 0 577 088
- CN-A- 108 844 560
- DE-A1-102017 102 152
- US-A- 4 399 358
- US-A- 4 658 133

## Beschreibung

Die vorliegende Erfindung betrifft einen optischen Encoder, umfassend einen Sender, einen Empfänger, einen Reflektor und einen Codeträger, wobei der Sender elektromagnetische Strahlung entlang einer Sendeachse in Richtung des Reflektors aussendet, wobei der Reflektor wenigstens einen Reflexionsabschnitt aufweist, der die elektromagnetische Strahlung entlang einer Empfangsachse in Richtung des Empfängers umlenkt, und wobei der Codeträger beweglich gelagert ist und eine Abfolge von Codeabschnitten aufweist, die die ausgesendete elektromagnetische Strahlung in Abhängigkeit von der Position des Codeträgers unterbrechen oder für eine Beaufschlagung des Empfängers freigeben.

In einem derartigen optischen Encoder trifft elektromagnetische Strahlung, die von einem Sender entlang einer Sendeachse ausgesendet wird, zunächst auf einen beweglichen Codeträger und gegebenenfalls in weiterer Folge entlang einer Empfangsachse auf einen Empfänger. Die ausgesendete elektromagnetische Strahlung kann beispielsweise sichtbares Licht, Infrarotstrahlung oder Ultraviolettstrahlung umfassen. Der Empfänger ist für die ausgesendete elektromagnetische Strahlung empfindlich und wandelt die empfangene elektromagnetische Strahlung in elektrische Signale um. Der Codeträger kann hierbei mit einer beweglichen Vorrichtung verbunden sein, deren Bewegung er aufnimmt. Durch eine Positionsänderung des Codeträgers wird die am Empfänger empfangene elektromagnetische Strahlung moduliert. Diese Modulation der am Empfänger eintreffenden elektromagnetischen Strahlung kann hinsichtlich einer Geschwindigkeit, einer relativen Positionsänderung oder einer absoluten Position des Codeträgers bzw. der hiermit verbundenen Vorrichtung ausgewertet werden. Der Codeträger wird hierbei oft auch als Taktscheibe oder Taktlineal bezeichnet. Der optische Encoder wird bisweilen auch als optischer Positionsgeber bezeichnet.

Bekannte optische Encoder lassen sich in transmittierende und reflektierende Typen unterteilen, welche sich in der Anordnung des Reflektors und der Ausgestaltung des Codeträgers unterscheiden. Bei transmittierenden Encodern weist der Codeträger eine Abfolge von strahlungsdurchlässigen und strahlungsabsorbierenden Abschnitten auf, welche die von dem Sender ausgesendete elektromagnetische Strahlung in Abhängigkeit von der Position des Codeträgers entweder für eine Beaufschlagung des Empfängers passieren lassen oder durch Absorption unterbrechen. Dagegen weisen die Encoder reflektierenden Typs Codeträger auf, welche eine Abfolge von elektromagnetische Strahlung reflektierenden und nicht reflektierenden Abschnitten aufweisen. Dabei reflektieren die reflektierenden Abschnitte des Codeträgers die vom Sender ausgesendete elektromagnetische Strahlung in Richtung der Empfangsachse des Empfängers. Elektromagnetische Strahlung, die auf die nicht reflektierenden Abschnitte trifft, wird dagegen nicht in Richtung der Empfangsachse des Empfängers abgelenkt und gelangt deshalb nicht zu dem Empfänger, insbesondere aufgrund von Absorption.

Aus diesen beiden Funktionsweisen ergibt sich, dass transmittierende Encoder eine Anordnung von Sender und Empfänger aufweisen, bei der die Sendeachse und die Empfangsachse einen Ausrichtungswinkel von 0 Grad einschließen. Bespielweise können Sender und Empfänger einander gegenüberliegen, wobei der Codeträger in dem Zwischenraum zwischen Sender und Empfänger angeordnet ist. Insbesondere fallen bei einer derartigen Konfiguration die Sendeachse und die Empfangsachse zusammen.

Reflektierende Encoder weisen dagegen eine Anordnung von Sender und Empfänger auf, bei der die Sendeachse und die Empfangsachse einen Ausrichtungswinkel von näherungsweise 180 Grad einschließen. Dabei können Sender und Empfänger in einer Ebene dicht nebeneinander angeordnet sein und eine parallele Ausrichtung aufweisen. Ein beabstandet von der Ebene von Sender und Empfänger angeordneter Codeträger kann nun in Abhängigkeit von seiner Position entweder die vom Sender ausgesendete elektromagnetische Strahlung in Richtung der Empfangsachse des Empfängers reflektieren (und somit für eine Beaufschlagung des Empfängers freigeben) oder aber absorbieren (und somit eine Beaufschlagung des Empfängers unterbrechen).

Transmittierende Encoder zeichnen sich durch ein hohes Maß an Robustheit und Stabilität gegenüber Positionsabweichungen von Sender, Empfänger oder Codeträger aus. Demgegenüber weisen reflektierende Encoder zwar einen einfacheren Aufbau, jedoch eine erhöhte Störanfälligkeit bzw. geringe Toleranzen hinsichtlich der genannten Positionsabweichungen auf. So kann beispielsweise schon eine leichte Abweichung von der vorgesehenen Anordnungsebene und Ausrichtung des Codeträgers dazu führen, dass die ausgesendete elektromagnetische Strahlung vom Empfänger nicht mehr korrekt empfangen wird.

Optische Encoder lassen sich grundsätzlich in einer Ausrichtung des Senders anordnen und betreiben, in der die Sendeachse parallel zu der Bewegungsebene des Codeträgers verläuft, oder in einer Ausrichtung des Senders, in der die Sendeachse orthogonal zu der Bewegungsebene des Codeträgers verläuft. Hierbei bietet die parallele Ausrichtung Vorteile in Bezug auf die Montage, Stabilität und Robustheit der optischen Encoder, wobei jedoch die Fertigung aufwendig sein kann (z.B. bei Verwendung eines ringförmig gewölbten Codeträgers) oder Einschränkungen bei der erreichbaren Auflösung resultieren können. Die orthogonale Ausrichtung kann eine einfachere Montage des Codeträgers ermöglichen, jedoch mit Nachteilen hinsichtlich der Störanfälligkeit bzw. Montagetoleranzen.

Ein optischer Encoder gemäß dem Oberbegriff des Anspruchs 1 ist aus der DE 10 2017 102152 A1 bekannt. Weitere optische Encoder sind aus der CN 108 844 560 A, EP 0 577 088 A2 und US 4 658 133 A bekannt.

Es ist eine Aufgabe der Erfindung, einen verbesserten optischen Encoder zu schaffen, der leicht zu montieren ist, einen zuverlässigen und störungsfreien Betrieb ermöglicht und eine hohe Auflösung der Positionsdetektion ermöglicht.

Diese Aufgabe wird durch einen optischen Encoder mit den Merkmalen des Anspruchs 1 gelöst.

Bei dem optischen Encoder verlaufen die Sendeachse des Senders und die Empfangsachse des Empfängers in einem Ausrichtungswinkel zueinander, der einen Wert im Bereich von 30 Grad bis 150 Grad aufweist. Der wenigstens eine Reflexionsabschnitt des Reflektors ist an einem bezüglich einer Drehachse schräg geneigten Umfang einer drehbaren Scheibe angeordnet. Der der Codeträger ist separat von dem Reflektor als flache Codescheibe ausgebildet, welche mit dem Reflektor fest verbunden ist und sich entlang einer Normalebene zu der Drehachse erstreckt, wobei der Codeträger in einem radialen Abstand zu der Drehachse zumindest eine kreisringförmige Codespur aufweist, welche die Abfolge von Codeabschnitten aufweist, wobei die Abfolge von Codeabschnitten abwechselnd strahlungsabsorbierend oder strahlungsdurchlässig ausgebildet ist.

Dadurch, dass der Ausrichtungswinkel zwischen Sendeachse und Empfangsachse nicht den typischen Wert von 0 Grad eines Encoders des transmittierenden Typs und auch nicht den typischen Wert von ungefähr 180 Grad eines Encoders des reflektierenden Typs aufweist, kann der optische Encoder je nach Anwendung flexibel angeordnet werden, insbesondere was die Ausrichtung der Sendeachse relativ zu der Bewegungsebene des Codeträgers betrifft. Hierbei können Sender und Empfänger in dem genannten Ausrichtungswinkel relativ zueinander auf einem gemeinsamen Träger angeordnet sein, was eine kompakte Ausbildung und kostengünstige Herstellung des optischen Encoders ermöglicht.

Der besondere Ausrichtungswinkel zwischen Sendeachse und Empfangsachse ermöglicht bei vielen Ausführungsformen auch eine vereinfachte Montage des optischen Encoders in der jeweiligen Anwendungsumgebung. Insbesondere muss der Codeträger typischerweise entlang der Rotationsachse einer Antriebs- oder Verbindungswelle montiert werden. Die relative Anordnung von Sender und Empfänger (z.B. in einer so genannten L-Konfiguration) vereinfacht eine solche axiale Montage des Codeträgers, selbst wenn der Codeträger als drehbare Scheibe ausgebildet ist.

Durch die besondere und in einem weiten Bereich wählbare relative Ausrichtung von Sender und Empfänger kann ein einfach und kostengünstig herzustellender Codeträger verwendet werden. Erfindungsgemäß ist der Codeträger als flache Codescheibe ausgebildet . Dies ermöglicht eine hohe Auflösung (d.h. eine hohe räumliche Dichte von Codeabschnitten bzw. eine entsprechend genaue Unterscheidung von geringen Positionsänderungen des Codeträgers). Beispielsweise kann der Codeträger als dünne Metallscheibe ausgebildet sein, in welche eine hochauflösende Abfolge von Codeabschnitten insbesondere mittels eines Lasers eingebrannt bzw. eingeschnitten sein kann. Beispielsweise lassen sich auf diese Weise Codeträger mit Auflösungen von 300 LPI (lines per inch) herstellen.

Da der Codeträger nach dem Prinzip eines transmittierenden Encoders ausgebildet ist, kann ein zuverlässiger und störungsfreier Betrieb des optischen Encoders gewährleistet werden. Der optische Encoder ist somit robust gegenüber etwaigen Positionsabweichungen von Sender, Empfänger oder Codeträger hinsichtlich Ausrichtung und relativen Abständen, sowohl was die Herstellung (Montagetoleranzen) als auch den Betrieb (z.B. Temperatureffekte) betrifft. Der optische Encoder macht es insbesondere auch nicht notwendig, den Abstand zwischen Codeträger und Empfänger möglichst zu minimieren, um am Empfänger ein Signal von hoher Auflösung und hoher Qualität zu erhalten, wie dies bei einem reflektierenden Encoder mit einem diffus reflektierenden Codeträger erforderlich sein kann.

Somit vereint der optische Encoder ein hohes Maß an Robustheit und Stabilität sowie ein hohes Auflösungsvermögen und eine einfache Montage.

Sofern im Zusammenhang mit der Erfindung eine Unterbrechung der ausgesendeten elektromagnetischen Strahlung genannt ist, bezieht sich dies auf eine Unterbrechung der Beaufschlagung des Empfängers mit der ausgesendeten elektromagnetischen Strahlung. Insbesondere kann eine solche Unterbrechung durch Absorption der elektromagnetischen Strahlung erfolgen, oder aber auch durch Umlenkung in eine andere Richtung als jene, die zu dem Empfänger führt.

Der Sender kann beispielsweise eine Leuchtdiode (insbesondere mit zugeordneter Sendeoptik, die die elektromagnetische Strahlung kollimiert) oder eine Laserdiode umfassen. Der Empfänger kann wenigstens ein strahlungsempfindliches Empfangselement, beispielsweise eine Fotodiode oder einen Fototransistor, umfassen, oder eine Gruppe bzw. Matrix von strahlungsempfindlichen Empfangselementen, insbesondere in einer eindimensionalen oder zweidimensionalen Anordnung (sogenanntes Array). Sofern der Empfänger mehrere Empfangselemente (z.B. Fotodioden) aufweist, kann es sich um separate Empfangselemente in einem diskreten Aufbau handeln, oder mehrere (zueinander gleichartig oder unterschiedlich ausgebildete, regelmäßig oder unregelmäßig angeordnete) Empfangselemente können integral in einer Baueinheit ausgebildet sein, beispielsweise als sogenannter ASIC. Die Sendeachse und die Empfangsachse können insbesondere senkrecht auf einer jeweiligen Sendefläche des Senders bzw. Empfangsflächen des Empfängers stehen.

Bei einigen Ausführungsformen können die Sendeachse und die Empfangsachse in einem Ausrichtungswinkel zueinander verlaufen, der einen Wert im Bereich von 60 Grad bis 120 Grad aufweist. Aufgrund eines Ausrichtungswinkels, der in diesem Bereich liegt, sind vielfältige Anordnungskonzepte von Sender und Empfänger möglich, um eine Anpassung an eine jeweilige Anwendung zu ermöglichen.

Gemäß einer Ausführungsform beträgt der Ausrichtungswinkel zwischen der Sendeachse und der Empfangsachse im Wesentlichen 90 Grad. Die von dem Sender ausgesendete elektromagnetische Strahlung wird von dem Reflektor somit um 90 Grad in Richtung der Empfangsachse des Empfängers abgelenkt. Die Sendefläche des Senders und die Empfangsfläche des Empfängers können somit zwei Ebenen bilden, die miteinander einen Winkel von 90 Grad einschließen, wodurch sich für die Sendefläche und die Empfangsfläche eine L-förmige Konfiguration ergibt. Eine derartige Konfiguration ermöglicht eine besonders einfache Fertigung und Montage. Im Übrigen erlaubt ein Ausrichtungswinkel von 90 Grad insbesondere einen besonders einfachen Wechsel des optischen Encoders von einer vertikalen Ausrichtung in eine horizontale Ausrichtung.

Der Codeträger ist als Codescheibe (insbesondere als Kreisscheibe oder Ringscheibe) ausgebildet, welche um eine Drehachse drehbar gelagert ist und in einem radialen Abstand zu der Drehachse zumindest eine kreisringförmige Codespur aufweist, welche die Abfolge von Codeabschnitten aufweist. Dabei können die Drehachse einerseits und die Sendeachse und/oder die Empfangsachse andererseits einen rechten Winkel zueinander bilden. Die Codescheibe kann bezüglich der Drehachse flach ausgebildet sein, d.h. sich innerhalb einer Normalebene zu der Drehachse erstrecken. Bei nicht beanspruchten Ausführungsformen kann der Codeträger auch als linear beweglicher Codestreifen ausgebildet sein, welcher zumindest eine geradlinige Codespur aufweist, welche die Abfolge von Codeabschnitten aufweist.

Die Abfolge von Codeabschnitten ist abwechselnd zum einen strahlungsdurchlässig oder zum anderen strahlungsabsorbierend ausgebildet. Somit trifft bei einer Bewegung des Codeträgers die vom Sender ausgesendete Strahlung abwechselnd auf Abschnitte, welche die ausgesendete elektromagnetische Strahlung für eine Beaufschlagung des Empfängers freigeben oder aber unterbrechen. Die Abfolge von Codeabschnitten kann durch verschiedene Methoden auf den Codeträger aufgebracht werden. So können die Codeabschnitte beispielsweise durch Drucken, Ätzen, Stanzen oder Laserschnitt gebildet sein.

Der wenigstens eine Reflexionsabschnitt kann spiegelnd reflektieren, um eine definierte gerichtete Reflexion zu bewirken (im Unterschied zu einem diffusen Reflektor). Bei einigen Ausführungsformen kann der wenigstens eine Reflexionsabschnitt diffus reflektieren.

Beispielsweise können der Reflektor und der wenigstens eine Reflexionsabschnitt kostengünstig aus weißem, diffus reflektierendem Kunststoff gefertigt sein. Alternativ hierzu kann der Reflektor kostengünstig aus Kunststoff gefertigt sein, der mit einer spiegelnden Oberflächenschicht versehen ist, um den wenigstens einen Reflexionsabschnitt zu bilden. Denkbar ist auch, dass der Reflektor aus transparentem Material gefertigt ist und eine Reflexion an dem wenigstens einen Reflexionsabschnitt mittels Totalreflexion erfolgt.

Bei einigen Ausführungsformen kann der Reflektor einen einzigen Reflexionsabschnitt aufweisen (z.B. der sich entlang des Umfangs eines drehbaren scheibenförmigen Reflektors erstreckt, insbesondere umfänglich geschlossen). Bei einigen Ausführungsformen kann der Reflektor mehrere Reflexionsabschnitte aufweisen, die nebeneinander liegen und mehrere Bahnen oder Abfolgen bilden (z.B. die sich entlang des Umfangs eines drehbaren scheibenförmigen Reflektors nebeneinander erstrecken). Bei einigen Ausführungsformen kann der Reflektor mehrere separate Reflexionsabschnitte aufweisen, die eine Abfolge bilden (z.B. wobei die Reflexionsabschnitte eine Abfolge entlang des Umfangs eines drehbaren scheibenförmigen Reflektors bilden).

Bei einigen Ausführungsformen kann der Reflektor zusätzlich zu einer ersten Abfolge von mehreren separaten Reflexionsabschnitten wenigstens eine weitere Abfolge von mehreren separaten Reflexionsabschnitten umfassen, die versetzt zu der ersten Abfolge von mehreren separaten Reflexionsabschnitten angeordnet ist und die elektromagnetische Strahlung in Richtung wenigstens einer weiteren Empfangsachse ablenkt. Hierbei kann insbesondere wenigstens ein weiterer Sender vorgesehen sein, welcher elektromagnetische Strahlung entlang wenigstens einer weiteren Sendeachse aussendet. Elektromagnetische Strahlung, welche von dem wenigstens einen weiteren Sender ausgesendet wird, kann dann beispielsweise von der weiteren Abfolge von mehreren separaten Reflexionsabschnitten in Richtung der wenigstens einen weiteren Empfangsachse abgelenkt werden. Hierdurch können eine erhöhte Auflösung und/oder eine absolute Positionsbestimmung des optischen Encoders ermöglicht werden.

Bei einigen Ausführungsformen ist/sind der oder die Reflexionsabschnitt(e) des Reflektors schräg zu der Sendeachse und zu der Empfangsachse ausgerichtet, insbesondere in einem jeweiligen Winkel von 45 Grad. Dadurch können die Sendeachse und die Empfangsachse insbesondere in einem Ausrichtungswinkel von 90 Grad angeordnet werden, was eine besonders kompakte Ausbildung des optischen Encoders in der genannten L-Konfiguration erlaubt.

Bei einigen Ausführungsformen sind der Reflektor und der Codeträger durch eine gemeinsame Baueinheit gebildet. Dadurch lassen sich Toleranzen in den Abmessungen und den relativen Abständen der Bauteile minimieren, was die Stabilität und die Genauigkeit von Messungen im Betrieb des optischen Encoders erhöht.

Bei einigen nicht beanspruchten Ausführungsformen können der Reflektor und der Codeträger integral einstückig miteinander ausgebildet sein.

Erfindungsgemäß ist der Codeträger separat von dem Reflektor ausgebildet, jedoch mit dem Reflektor fest verbunden. Wenn der Codeträger und der Reflektor separat voneinander ausgebildet sind, kann ein jeweiliges optimales Material gewählt werden. Beispielsweise kann der Reflektor kostengünstig als verspiegeltes Kunststoffteil gefertigt sein, während der Codeträger als flache Metallplatte gefertigt ist, an der die Abfolge von Codeabschnitten mit einer hohen räumlichen Dichte und einer hohen Genauigkeit auf kostengünstige Weise angebracht werden kann.

Bei einigen Ausführungsformen, insbesondere wenn der Reflektor und der Codeträger durch eine gemeinsame Baueinheit gebildet sind, ist der Reflektor beweglich. Beispielsweise können sich der Reflektor und der Codeträger als starrer Körper gleichförmig und bei einer Drehbewegung insbesondere mit einer gleichen Drehgeschwindigkeit bewegen.

Bei einigen Ausführungsformen, insbesondere wenn der Reflektor und der Codeträger durch eine gemeinsame Baueinheit gebildet sind, ist der Reflektor als drehbare Scheibe ausgebildet, insbesondere mit einem kreisförmigen Umriss. Der wenigstens eine Reflexionsabschnitt des Reflektors kann hierbei an einem schräg geneigten Umfang (insbesondere Außenumfang) der drehbaren Scheibe angeordnet sein, wobei der Reflexionsabschnitt insbesondere bezüglich der Drehachse des Reflektors schräg geneigt ist. Im Falle einer Ausbildung des Codeträgers als drehbare Codescheibe kann der an dem schrägen Umfang angeordnete Reflexionsabschnitt beispielsweise in einem Winkel von 45 Grad zu der Codescheibe und/oder der Drehachse der Codescheibe ausgerichtet sein.

Der wenigstens eine Reflexionsabschnitt des Reflektors ist separat von der Abfolge von Codeabschnitten ausgebildet und/oder beabstandet von der Abfolge von Codeabschnitten angeordnet, wobei die Abfolge von Codeabschnitten abwechselnd strahlungsabsorbierend oder strahlungsdurchlässig ausgebildet ist. Beispielsweise kann der Codeträger parallel zu einer Haupterstreckungsebene des Reflektors ausgerichtet und zwischen dem wenigstens einen Reflexionsabschnitt des Reflektors einerseits und dem Sender oder dem Empfänger andererseits angeordnet sein. Bei einer Ausführung des Reflektors als drehbare Scheibe und des Codeträgers als Codescheibe sind der Reflektor und der Codeträger fest miteinander verbunden (insbesondere axial beabstandet) und parallel zueinander entlang einer gemeinsamen Drehachse angeordnet. So kann die Codescheibe beispielsweise an eine der Haupterstreckungsebene entsprechenden Seite des Reflektors angrenzen und/oder mit dieser verbunden sein.

Bei einigen Ausführungsformen ist die Abfolge von Codeabschnitten derart an dem Codeträger angeordnet, dass die elektromagnetische Strahlung senkrecht oder im Wesentlichen senkrecht auf die Abfolge von Codeabschnitten trifft (nach dem Aussenden oder nach der Reflexion). Hierdurch kann bei einem kollimierten Aussenden der elektromagnetischen Strahlung eine hohe Auflösung erreicht werden. Denkbar ist beispielweise, dass die Abfolge von Codeabschnitten einen Kreisring bildet, der koaxial an einem kreisförmigen Reflektor angeordnet ist und mit diesem verbunden ist. Der kreisförmige Reflektor und der (z.B. kreisförmige oder kreisringförmige) Codeträger können hierbei separat herstellt und zu einer gemeinsamen Baueinheit verbunden sein.

Erfindungsgemäß ist der Reflektor als drehbare Scheibe (insbesondere kreisförmig) ausgebildet, welche um eine Drehachse drehbar gelagert ist, wobei der wenigstens eine Reflexionsabschnitt des Reflektors an einem bezüglich der Drehachse schräg geneigten Umfang der drehbaren Scheibe angeordnet ist, und wobei der Codeträger als Codescheibe (z.B. kreisförmig oder kreisringförmig) ausgebildet ist, welche mit dem Reflektor fest verbunden ist und sich senkrecht zu der Drehachse erstreckt, wobei der Codeträger in einem radialen Abstand zu der Drehachse zumindest eine kreisringförmige Codespur aufweist, welche die Abfolge von Codeabschnitten aufweist, wobei die Abfolge von Codeabschnitten abwechselnd strahlungsabsorbierend oder strahlungsdurchlässig ausgebildet ist.

Bei einigen Ausführungsformen, insbesondere bei der letztgenannten Ausführungsform (Reflektor ist drehbare Scheibe, Codeträger ist hiermit verbundene Codescheibe), kann wenigstens ein Unterbrechungsabschnitt des Reflektors, der benachbart zu dem wenigstens einen Reflexionsabschnitt angeordnet ist und die elektromagnetische Strahlung unterbricht (z.B. durch Absorption oder durch eine den Empfänger nicht beaufschlagenden Umlenkung), einen zusätzlichen Codeabschnitt bilden. Hierdurch kann ergänzend zu der Abfolge von Codeabschnitten des Codeträgers (z.B. Codespur der Codescheibe) wenigstens ein zusätzlicher Codeabschnitt gebildet werden, der beispielsweise als sogenannter Indexgeber dienen kann und jedoch separat von dem Codeträger ausgebildet ist. Insbesondere kann auch vorgesehen sein, dass die Abfolge von Codeabschnitten und der zusätzliche Codeabschnitt von demselben Empfänger erfasst werden. Hierfür können der Sender, der Reflektor, der Codeträger und der Empfänger in geeigneter Weise relativ zueinander angeordnet sein.

Bei einigen nicht beanspruchten Ausführungsformen ist die Abfolge von Codeabschnitten hingegen abwechselnd strahlungsabsorbierend oder reflektierend ausgebildet. Der Codeträger und der Reflektor können hierbei durch ein einziges Bauteil gebildet sein, wobei ein reflektierender Codeabschnitt einen jeweiligen Reflexionsabschnitt des Reflektors bildet. Bei einer Bewegung des Codeträgers wird die von Sender ausgesendete elektromagnetische Strahlung nur dann in Richtung der Empfangsachse des Empfängers reflektiert, wenn die ausgesendete Strahlung auf einen reflektierenden Codeabschnitt trifft. Beispielsweise kann die Abfolge von abwechselnd strahlungsabsorbierenden oder reflektierenden Codeabschnitten durch eine entsprechende Ausgestaltung des Umfanges eines kreisscheibenförmigen Reflektors gebildet sein. Diese Ausführungsform eignet sich insbesondere für Anwendungen, welche nur eine geringe Auflösung aber ein hohes Maß an Robustheit und Stabilität benötigen. Allgemein kann/können somit einer, einige oder sämtliche der Codeabschnitte durch den einen oder einen jeweiligen Reflexionsabschnitt gebildet sein.

Bei einigen Ausführungsformen, insbesondere wenn der Codeträger und der Reflektor durch ein einziges Bauteil gebildet sind, kann der Reflektor eine Abfolge von mehreren Reflexionsabschnitten aufweisen.

Bei einigen Ausführungsformen, insbesondere wenn der Codeträger und der Reflektor durch ein einziges Bauteil gebildet sind, kann der Reflektor zusätzlich zu einer Abfolge von mehreren Reflexionsabschnitten wenigstens eine weitere Abfolge von Reflexionsabschnitten aufweisen, wobei die weitere Abfolge von Reflexionsabschnitten einen einzigen oder mehrere Reflexionsabschnitte aufweisen kann. Der oder die Reflexionsabschnitt(e) der weiteren Abfolge kann/können insbesondere als sogenannter Indexgeber dienen.

Bei einigen Ausführungsformen weist der Codeträger mehrere Abfolgen von Codeabschnitten auf, wobei die mehreren Abfolgen mehrere nebeneinander liegende Codespuren bilden. Hierbei ist es möglich, mehrere Sender mit verschiedenen Sendeachsen vorzusehen, die insbesondere parallel zueinander verlaufen können, und/oder mehrere Empfänger mit verschiedenen Empfangsachsen vorzusehen, die ebenfalls insbesondere parallel zueinander verlaufen können. Auch kann der Reflektor, wie bereits erläutert, mehrere versetzt nebeneinander liegende Abfolgen von Reflexionsabschnitten aufweisen.

Durch eine derartige Vervielfältigung von Codeabschnitten können genauere Messungen ermöglicht werden. So können mehrere Codespuren bei inkrementellen Messungen beispielsweise dazu benutzt werden, die Drehrichtung des Codeträgers zu bestimmen oder Durchläufe durch einen bestimmten Drehwinkel des Codeträgers zu detektieren und daraus eine Anzahl von vollführten Umdrehungen zu bestimmen. Mehrere Codespuren, die jeweils mehrere Codeabschnitte aufweisen (insbesondere in unterschiedlicher Abfolge) können insbesondere für eine Messung von absoluten Positionswerten verwendet werden. Alternativ zu mehreren Codespuren, die jeweils mehrere Codeabschnitte aufweisen, kann zusätzlich zu einer Codespur mit einer Abfolge von mehreren Codeabschnitten auch eine Codespur vorgesehen sein, die lediglich einen einzigen Codeabschnitt aufweist (sogenannter Index).

Bei einigen Ausführungsformen ist der Sender dazu ausgebildet, die elektromagnetische Strahlung als kollimierten Strahl auszusenden. Beispielsweise kann der Sender eine Laserdiode aufweisen. Gemäß einer Ausführungsform umfasst der optische Encoder einen Kollimator (z.B. Sammellinse), der zwischen dem Sender (z.B. Leuchtdiode) und dem Reflektor angeordnet ist und die von dem Sender ausgesendete elektromagnetische Strahlung entlang der Sendeachse bündelt und somit insbesondere die Intensität des am Empfänger empfangenen modulierten Signals erhöht und eine höhere Ortsauflösung ermöglicht.

Die Erfindung wird nachfolgend lediglich beispielhaft anhand der Figuren erläutert.
Fig. 1A und 1B zeigen perspektivischen Ansichten eines Abschnitts einer Ausführungsform eines erfindungsgemäßen optischen Encoders in vertikaler Ausrichtung,
Fig. 2A bis 2D zeigen Querschnittsansichten (2A, 2B) und perspektivische Ansichten (2C und 2D) der Sende- und Empfangsvorrichtung 20 der Ausführungsform von Fig. 1,
Fig. 3A zeigt eine Querschnittsansicht eines Abschnitts von Reflektor und Codeträger der Ausführungsform von Fig. 1A und 1B,
Fig. 3B zeigt eine Querschnittsansicht eines Abschnitts von Reflektor und Codeträger einer weiteren Ausführungsform,
Fig. 4A bis 4C zeigen eine Querschnittsansicht eines Abschnitts der Ausführungsform der Fig. 1A und 1B,
Fig. 5A bis Fig. 5D zeigen Ausführungsformen von Empfangsvorrichtungen eines optischen Encoders in Draufsichten,
Fig. 6A bis 6C zeigen eine Querschnittsansicht (6A) und zwei perspektivische Ansichten (6B und 6C) eines Abschnitts einer nicht beanspruchten Ausführungsform eines optischen Encoders,
Fig. 6D zeigt den Reflektor der nicht beanspruchten Ausführungsform der Fig. 6A bis 6C in einer perspektivischen Unteransicht.
Fig. 7A bis 7E zeigen drei perspektivische Ansichten (7A, 7B, 7D) und zwei Querschnittsansichten (7C und 7E) eines Abschnitts einer weiteren Ausführungsform eines optischen Encoders,
Fig. 8A bis 8F zeigen Querschnittsansichten (8A und 8D) und vier perspektivische Ansichten (8B, 8C, 8E, 8F) eines Abschnitts der nicht beanspruchten Ausführungsform von Fig. 6A,
Fig. 9A bis 9C zeigen eine Querschnittsansicht (9A) und zwei perspektivische Ansichten (9B und 9C) eines Abschnitts einer weiteren nicht beanspruchten Ausführungsform eines optischen Encoders, und
Fig. 9D zeigt den Reflektor der nicht beanspruchten Ausführungsform der Fig. 9A bis 9C in einer perspektivischen Draufsicht.
Fig. 10A bis 10C zeigen eine Querschnittansicht (10A) und zwei perspektivische Ansichten (10B und 10C) eines Abschnitts einer weiteren nicht beanspruchten Ausführungsform des optischen Encoders.
Fig. 10D zeigt einen möglichen Montageschritt des Reflektors der nicht beanspruchten Ausführungsform der Fig. 10A bis 10C.

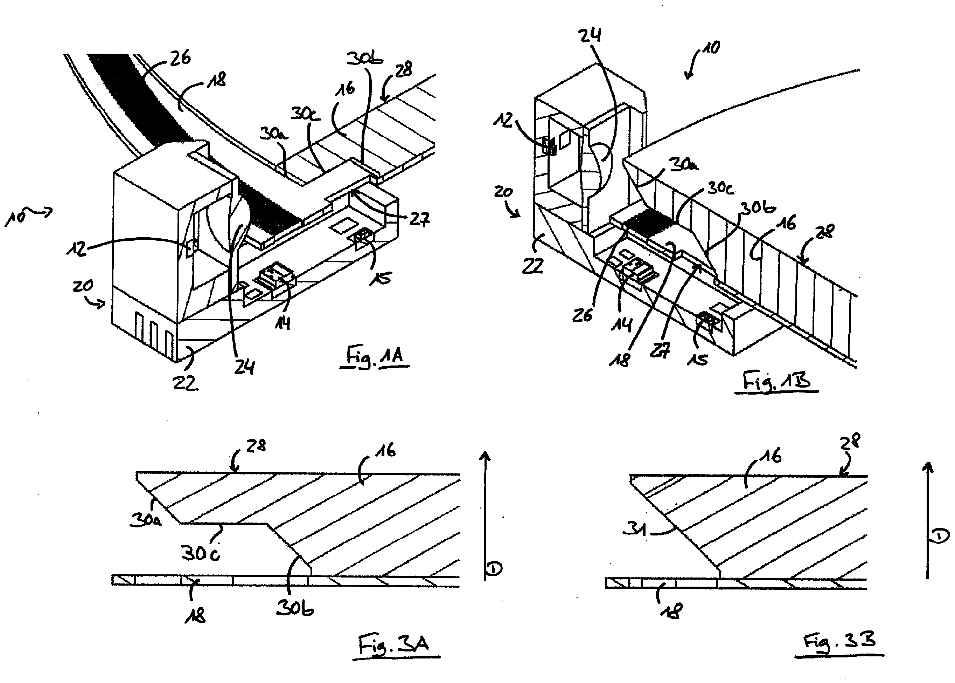

Fig. 1A und 1B zeigen einen radial geschnittenen Abschnitt einer Ausführungsform eines optischen Encoders 10 in perspektivischen Ansichten. Der optische Encoder 10 umfasst eine Sende- und Empfangsvorrichtung 20, einen drehbaren, im Wesentlichen kreisscheibenförmigen Reflektor 16 und einen drehbaren, kreisscheibenförmigen Codeträger 18. Die Sende- und Empfangsvorrichtung 20 umfasst einen optoelektronischen Sender 12, einen ersten optoelektronischen Empfänger 14 und einen zweiten optoelektronischen Empfänger 15, welche auf einen gemeinsamen Trägerbauteil 22 angeordnet sind.

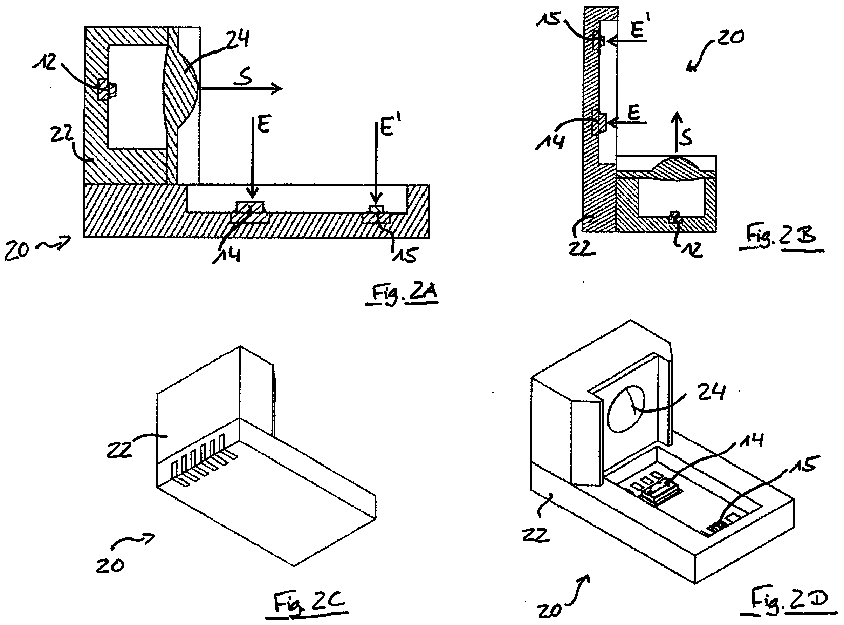

Der Sender 12 sendet elektromagnetische Strahlung (z.B. sichtbares Licht, Infrarotstrahlung oder ultraviolette Strahlung) entlang einer Sendeachse S (siehe Fig. 2A und 2B) aus, während der erste Empfänger 14 elektromagnetische Strahlung entlang einer Empfangsachse E (siehe Fig. 2A und 2B) und der zweite Empfänger 15 elektromagnetische Strahlung entlang einer Empfangsachse E' (siehe Fig. 2A und 2B) empfängt. Der erste Empfänger 14 und der zweite Empfänger 15 weisen jeweils wenigstens ein Empfangselement, insbesondere eine Fotodiode oder ein Fotodioden-Array, auf, welches für die ausgesendete elektromagnetische Strahlung empfindlich ist und diese in ein elektrisches Signal umwandeln kann. Die Sendeachse S ist bei dem gezeigten Ausführungsbeispiel parallel zu der Erstreckungs- bzw. Bewegungsebene des Codeträgers 18 ausgerichtet.

Der optische Encoder 10 umfasst weiterhin einen optischen Kollimator 24, hier in Form einer Linse, welche entlang der Sendeachse S und bevorzugt nahe am Sender 12 angeordnet ist und die vom Sender 12 ausgesendete elektromagnetische Strahlung bündelt.

Der Codeträger 18 ist als eine dünne Codescheibe (z.B. aus Metall) ausgebildet, welche einen kreisförmigen Umriss und eine kreisringförmige Abfolge von Codeabschnitten 26 aufweist (auch als Codespur bezeichnet). Die Codeabschnitte 26 sind durch die Codescheibe durchdringende längliche Schlitze gebildet, die sich in radialer Richtung erstrecken und beispielsweise durch Fräsen, Stanzen oder Laserschneiden gebildet sein können. Die Abfolge von Codeabschnitten 26 wirkt somit für elektromagnetische Strahlung, welche senkrecht oder im Wesentlichen senkrecht auf den Codeträger 18 bzw. die Codescheibe trifft, abwechselnd strahlungsdurchlässig bzw. strahlungsabsorbierend. Neben der Abfolge von Codeabschnitten 26 weist der Codeträger 18 eine zweite Abfolge von Codeabschnitten 27 auf, welche radial versetzt zu der Abfolge von Codeabschnitten 26 ausgebildet ist. In der gezeigten Ausführungsform umfasst die zweite Abfolge von Codeabschnitten 27 ein einzelnes strahlungsdurchlässiges Codeelement in Form einer Ausnehmung, welches den zweiten Empfänger 15 für eine Beaufschlagung mit elektromagnetischer Strahlung freigibt.

Der Reflektor 16 ist als Scheibe ausgebildet, welche einen kreisförmigen Umriss aufweist, sich entlang einer Haupterstreckungsebene 28 erstreckt und um eine Drehachse D (siehe Fig. 3A und 3B) drehbar gelagert ist, wobei die Haupterstreckungsebene 28 mit der Drehachse D einen Winkel von 90 Grad einnimmt. Der Reflektor 16 weist zwei durchgehende Reflexionsabschnitte 30a, 30b auf, welche an einem jeweiligen Umfang der drehbaren Scheibe angeordnet sind und bezüglich der Drehachse D axial und radial versetzt zueinander sind. Die Reflexionsabschnitte 30a, 30b sind somit an abgeschrägten Bereichen des Außenumfangs des Reflektors 16 bzw. der drehbaren Scheibe ausgebildet und vertikal übereinander angeordnet, wobei ein unterer Reflexionsabschnitt 30b relativ zu einem oberen Reflexionsabschnitt 30a einen radialen Versatz in Richtung der Drehachse D aufweist. Beide Reflexionsabschnitte 30a, 30b sind durch einen, hier horizontal ausgebildeten, Verbindungsabschnitt 30c miteinander verbunden.

Die Reflexionsabschnitte 30a, 30b sind schräg zu der Sendeachse S und zu den Empfangsachsen E, E' ausgerichtet und reflektieren entlang der Sendeachse S ausgesendete elektromagnetische Strahlung in Richtung der Empfangsachsen E und E'. In der gezeigten Ausführungsform reflektiert der Reflexionsabschnitt 30a elektromagnetische Strahlung in Richtung der Empfangsachsen E des ersten Empfängers 14, während der Reflexionsabschnitt 30b elektromagnetische Strahlung in Richtung der Empfangsachse E' des zweiten Empfängers 15 reflektiert. Des Weiteren weisen die Reflexionsabschnitte 30a und 30b identische Ausrichtungswinkel relativ zu der Sendeachse S auf. In anderen Ausführungsformen können besagte Ausrichtungswinkel jedoch auch unterschiedliche Werte einnehmen.

Der Reflektor 16 kann aus opakem Kunststoff gefertigt sein und Reflexionsabschnitte 30a, 30b in Form von reflektierenden Beschichtungen aufweisen. Denkbar ist auch, dass der Reflektor 16 aus transparentem Kunststoff gefertigt ist und vom Sender 12 entlang der Sendeachse S ausgesendete elektromagnetische Strahlung in Richtung der Empfangsachsen E und E' total reflektiert.

Fig. 2A bis 2D zeigen die Sende- und Empfangsvorrichtung 20 der Ausführungsform von Fig. 1 in zwei Querschnittsansichten (2A und 2B) und zwei perspektivischen Ansichten (2C und 2D). In der Sende- und Empfangsvorrichtung 20 sind der Sender 12 einerseits sowie der erste Empfänger 14 und der zweite Empfänger 15 andererseits auf dem Trägerbauteil 22 in einer L-förmigen Konfiguration angeordnet, sodass der jeweilige Ausrichtungswinkel zwischen der Sendeachse S und der Empfangsachse E bzw. der Empfangsachse E' 90 Grad beträgt. Dabei stehen die Sendeachse S und die Empfangsachse E senkrecht auf jeweiligen Sende- bzw. Empfangsflächen des Senders 12 und des ersten Empfängers 14, welche somit miteinander einen Winkel von 90 Grad einschließen. Eine entsprechende Beziehung gilt auch für die Sendeachse S und die Empfangsachse E' des zweiten Empfängers 15.

In der Darstellung der Fig. 2A ist die Sende- und Empfangsvorrichtung 20 gemäß der Ausführungsform der Fig. 1A und 1B montiert. Dabei liegen die ersten und zweiten Empfänger 14 und 15 mit dem Trägerbauteil 22 horizontal auf einer nicht gezeigten Unterlage auf, wohingegen die Befestigungsebene des Senders 12 in einem Winkel von 90 Grad zu der Unterlage angeordnet ist. Fig. 2B zeigt eine Sende- und Empfangsvorrichtung 20, welche eine invertierte Ausrichtung aufweist, bei der die Sendeachse S senkrecht zu der Erstreckungs- bzw. Bewegungsebene des Codeträgers 18 ausgerichtet ist. Hier liegt der Sender 12 mit dem Trägerbauteil 22 horizontal auf der Unterlage auf, wohingegen die jeweilige Befestigungsebene des ersten und zweiten Empfängers 14 und 15 in einem Winkel von 90 Grad zu der Unterlage angeordnet ist. Die L-förmige Ausbildung der Sende- und Empfangsvorrichtung 20 ermöglicht einen schnellen Wechsel zwischen beiden Ausrichtungsvarianten und bietet somit in hohes Maß an Flexibilität in der Anwendung des optischen Encoders 10.

In der Ausführungsform der Fig. 1A und 1B bilden der Reflektor 16 und der Codeträger 18 eine gemeinsame Baueinheit. Fig. 3A zeigt einen Abschnitt einer den Reflektor 16 und den Codeträger 18 umfassenden gemeinsamen Baueinheit in einer Querschnittsansicht. Hierbei sind der Reflektor 16 und der Codeträger 18 bzw. die Codescheibe axial beabstandet zueinander entlang der gemeinsamen Drehachse D angeordnet und fest miteinander verbunden (z.B. verklebt). Die Richtung der Drehachse ist D ist durch einen Pfeil angegeben. Insbesondere ist der Codeträger 18 bzw. die Codescheibe parallel zur Haupterstreckungsebene 28 des Reflektors 16 ausgerichtet. Der Reflektor 16 und der Codeträger 18 verhalten sich bei einer Drehung um die Drehachse D somit als starrer Körper und bewegen sich bei einer Drehbewegung um die Drehachse D mit derselben Drehgeschwindigkeit bzw. Rotationsfrequenz.

Fig. 3B zeigt einen Abschnitt einer den Reflektor 16 und den Codeträger 18 umfassenden gemeinsamen Baueinheit einer weiteren Ausführungsform in einer Querschnittsansicht. Im Unterschied zu der Ausführungsform der Fig. 1A, 1B und 3A weist der Reflektor 16 der Fig. 3B lediglich einen einzigen durchgehenden Reflexionsabschnitt 31 auf, welcher an dem Umfang der drehbaren, einen kreisförmigen Umriss aufweisenden Codescheibe angeordnet ist.

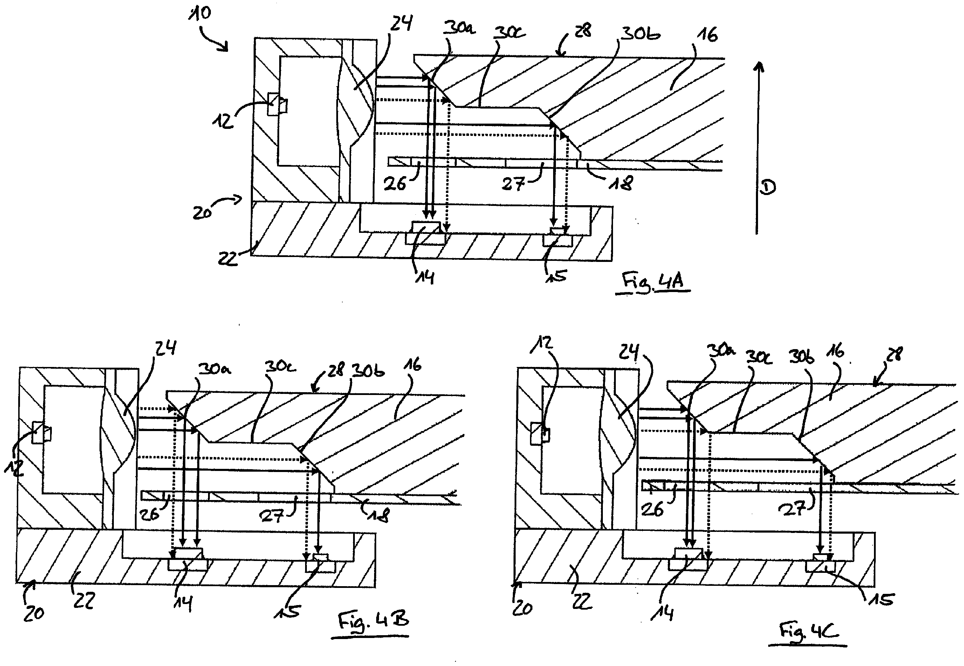

Fig. 4A zeigt einen Abschnitt einer Querschnittsansicht der Ausführungsform der Fig. 1A und 1B. Der optische Encoder 10 kann beispielsweise mit einer zugeordneten, nicht gezeigten Vorrichtung verbunden sein, um deren Bewegung oder deren Bewegungskomponenten zu bestimmen. Der optische Encoder 10 nimmt die Bewegung oder die Bewegungskomponenten der Vorrichtung über die Drehachse D auf und überführt diese in eine Drehung des Reflektors 16 und des Codeträgers 18. Hierfür können der Reflektor 16 und der Codeträger 18 mit einer drehbaren Welle (nicht gezeigt) fest verbunden sein, die Teil der zugeordneten Vorrichtung und/oder Teil des optischen Encoders 10 sein kann.

Elektromagnetische Strahlung, welche vom Sender 12 entlang der Sendeachse S ausgesendet wird, wird von den Reflexionsabschnitten 30a, 30b des Reflektors 16 in Richtung der Empfangsachsen E und E' des ersten und zweiten Empfängers 14 und 15 reflektiert. In Fig. 4A repräsentieren durchgezogene Pfeile Strahlverläufe von elektromagnetischer Strahlung, die von den Reflexionsabschnitten 30a, 30b in entsprechender Weise reflektiert wird. Demgegenüber repräsentieren unterbrochene Pfeile Strahlverläufe von elektromagnetischer Strahlung, die derart ausgesendet und reflektiert wird, dass sie den ersten oder zweiten Empfänger 14 bzw. 15 nicht erreicht.

Auf dem Weg vom Sender 12 zu den ersten und zweiten Empfängern 14 und 15 trifft die elektromagnetische Strahlung auf den Codeträger 18, welcher mit einer durch die Bewegung der zugeordneten Vorrichtung gegebenen Drehgeschwindigkeit um die Drehachse D rotiert. Durch die Bewegung des Codeträgers 18 trifft die elektromagnetische Strahlung abwechselnd auf strahlungsdurchlässige und strahlungsabsorbierende Codeabschnitte 26 bzw. 27, wodurch die an dem ersten und zweiten Empfänger 14 und 15 empfangene elektromagnetische Strahlung moduliert wird. Diese Modulation der an dem ersten und zweiten Empfänger 14 und 15 eintreffenden elektromagnetischen Strahlung kann nun hinsichtlich einer Geschwindigkeit, einer relativen Positionsänderung oder einer absoluten Position der Codescheibe 18 bzw. der zugeordneten Vorrichtung ausgewertet werden.

Fig. 4B und Fig. 4C zeigen den Einfluss von Positionsabweichungen und Toleranzen in den relativen Abständen von Sender 12, Reflektor 16 mit Codeträger 18 und erstem und zweitem Empfänger 14, 15. Fig. 4B zeigt einen Ausschnitt einer Querschnittsansicht der Ausführungsform der Fig. 4A, wobei die gemeinsame Baueinheit von Reflektor 16 und Codeträger 18 einen verringerten Abstand zu dem Sender 12 und auch zu dem ersten und zweiten Empfänger 14 und15 aufweist, d.h. in der Darstellungsweise gemäß Fig. 4B radial nach außen und axial nach unten versetzt ist. Demgegenüber zeigt Fig. 4C einen Ausschnitt einer Querschnittsansicht der Ausführungsform der Fig. 4A, wobei die gemeinsame Baueinheit von Reflektor 16 und Codeträger 18 einen vergrößerten Abstand zu dem ersten und zweiten Empfänger 14 und15 aufweist, d.h. in der Darstellungsweise gemäß Fig. 4C axial nach oben versetzt ist. Wie in Fig. 4B und Fig. 4C gezeigt haben diese Positionsabweichungen und Abstandsänderungen, welche im Rahmen üblicher Toleranzen bei der Montage und während des Betriebs des optischen Encoders 10 (etwa aufgrund von Erschütterungen oder Temperatureffekten) auftreten können, keinen Einfluss auf die Funktionsfähigkeit des optischen Encoders 10. In den beiden gezeigten, von nominellen relativen Abständen abweichenden Fällen wird elektromagnetische Strahlung von den Reflexionsabschnitten 30a, 30b erhalten und in Richtung des ersten und zweiten Empfängers 14 und 15 abgelenkt, was in analoger Weise zur Fig. 4A wiederum durch durchgezogene und unterbrochene Pfeile dargestellt ist. Mit anderen Worten ist der optische Encoder 10 trotz der Positionsabweichungen und Abstandsänderungen stabil betreibbar.

Ein besonderer Vorteil der beschriebenen Ausführungsformen besteht auch darin, dass der Codeträger 18 bzw. die Codescheibe bezüglich der Drehachse D in axialer Richtung (und somit entlang der zugeordneten Antriebs- oder Verbindungswelle) montiert werden kann (in den gezeigten Darstellungen in vertikaler Richtung von oben), ohne dass der Sender 12 und die Empfänger 14 und 15 die Montage des Codeträgers 18 behindern.

Die beschriebenen Ausführungsformen weisen zwei Empfänger 14 und 15 auf. Denkbar sind jedoch auch Ausführungsformen, welche lediglich einen Empfänger aufweisen und auf einen zweiten Empfänger verzichten.

Der in den gezeigten Ausführungsformen durch den zweiten Empfänger 15 bereitgestellte zweite Messkanal kann beispielsweise zur Bestimmung einer Drehrichtung benutzt werden. In einer weiteren Anwendung kann der zweite Messkanal bei inkrementell arbeitenden optischen Encodern 10 dazu dienen, Durchläufe durch einen bestimmten Drehwinkel zu detektieren und hieraus eine Anzahl von vollendeten Umdrehungen zu bestimmen. Bei absolut arbeitenden optischen Encodern, welche zur Bestimmung eines Absolutwerts des Drehwinkels eingesetzt werden, ist hingegen die Ausbildung von wenigstens einem derartigen zusätzlichen Messkanal zwingend erforderlich.

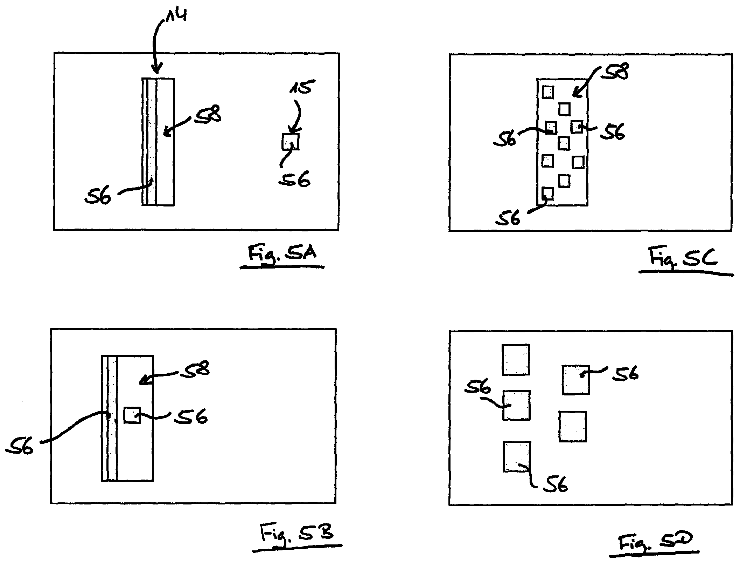

Fig. 5A bis Fig. 5D zeigen Ausführungsformen von Empfangsvorrichtungen derartiger absolut arbeitender optischer Encoder 10 in Draufsichten. In Fig. 5A wird der erste Empfänger 14 durch eine Reihe von Empfangselementen 56, beispielsweise Fotodioden, gebildet, welche in einer linearen Matrix hintereinander angeordnet sind. Der erste Empfänger 14 ist hierbei als ASIC 58 (anwendungsspezifische integrierte Schaltung) ausgebildet. Der zweite Empfänger 15 wird durch ein separates Empfangselement 56, insbesondere eine Fotodiode, gebildet, welches seitlich versetzt zum ersten Empfänger 14 angeordnet ist und nicht in die ASIC 58 integriert ist. Demgegenüber zeigt Fig. 5B eine Ausführungsform, welche auf der Ausführungsform der Fig. 5A basiert, dabei aber einen zweiten Empfänger 15 aufweist, dessen Empfangselement 56 in die ASIC 58 integriert ist. Die Fig. 5C zeigt eine Ausführungsform einer Empfangsvorrichtung, in der Empfangselemente 56, die wiederum als Fotodioden ausgebildet sein können, in einer zweidimensionalen Matrix angeordnet und als ASIC 58 ausgebildet sind. Die jeweiligen Empfangselemente 58 entsprechen hierbei unterschiedlichen Werten einer binären Codierung, wodurch sich der Absolutwert des Drehwinkels bestimmen lässt. Die Ausführungsform der Fig. 5D unterscheidet sich von der Ausführungsform der Fig. 5C dadurch, dass die einzelnen Empfangselemente 56 nicht in eine ASIC integriert, sondern diskret ausgebildet und separat angeordnet sind.

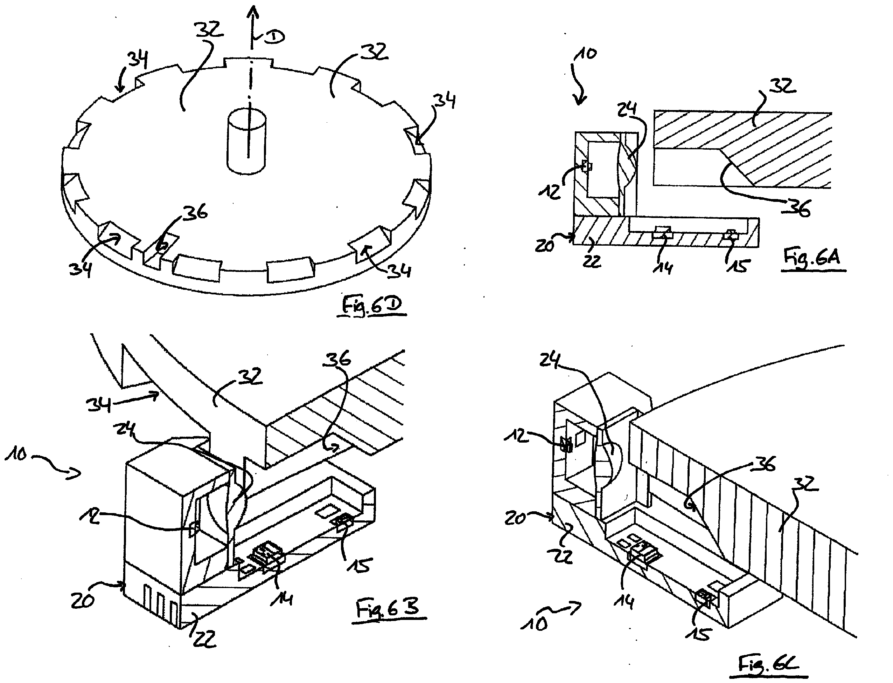

Fig. 6A bis 6C zeigen eine Querschnittsansicht (Fig. 6A) und zwei perspektivische Ansichten (Fig. 6B und 6C) eines Abschnitts einer nicht beanspruchten Ausführungsform eines optischen Encoders 10. Des Weiteren zeigt Fig. 6D den Reflektor 32 der Ausführungsform der Fig. 6A bis 6C in einer perspektivischen Unteransicht. Auch bei dieser Ausführungsform bilden Reflektor 32 und Codeträger 18 eine gemeinsame Baueinheit, welche um die Drehachse D drehbar gelagert ist. Die Anordnung von Sender 12, erstem Empfänger 14 und zweitem Empfänger 15 entspricht der Anordnung der Ausführungsform von Fig. 1A (Sendeachse S verläuft parallel zu der Bewegungsebene des Codeträgers 18, also in horizontaler Richtung). Im Gegensatz dazu weist die Ausführungsform der Fig. 6A jedoch keinen separat ausgebildeten Codeträger (z.B. Codescheibe) auf. Vielmehr ist der Codeträger in die Ausbildung des Reflektors 32 integriert, d.h. integral einstückig mit diesem ausgebildet.

Hierzu ist der Außenumfang des im Wesentlichen kreisscheibenförmigen Reflektors 32 in eine Abfolge von abwechselnd strahlungsabsorbierenden oder reflektierenden Abschnitten unterteilt. Die hierdurch gebildete Abfolge von schräg geneigten Reflexionsabschnitten 34 dient zugleich als Abfolge von Codeabschnitten mit verhältnismäßig geringer Auflösung. Bei einer Drehbewegung des Reflektors 32 um die Drehachse D wird die von Sender 12 ausgesendete elektromagnetische Strahlung nur dann in Richtung der Empfangsachse E des ersten Empfängers 14 reflektiert, wenn sie auf einen der Reflexionsabschnitte 34, oder anders ausgedrückt, auf einen der reflektierenden Codeabschnitte trifft.

Der Reflektor 32 weist eine weitere Abfolge von Reflexionsabschnitten 36 auf, welche bezüglich der Drehachse des Reflektors 32 radial versetzt zu der Abfolge von Reflexionsabschnitten 34 angeordnet ist. In der gezeigten Ausführungsform wird die weitere Abfolge von Reflexionsabschnitten 36 durch einen einzigen Reflexionsabschnitt 36 gebildet, der als Indexgeber bei inkrementell arbeitenden optischen Encodern 10 eingesetzt werden kann, um beispielsweise die Anzahl vollendeter Umläufe um die Drehachse D zu bestimmen. Allerdings können auch mehrere Reflexionsabschnitte 36 vorgesehen sein, insbesondere in einem gleichmäßigen Winkelabstand zueinander (z.B. 180 Grad, 90 Grad oder 45 Grad).

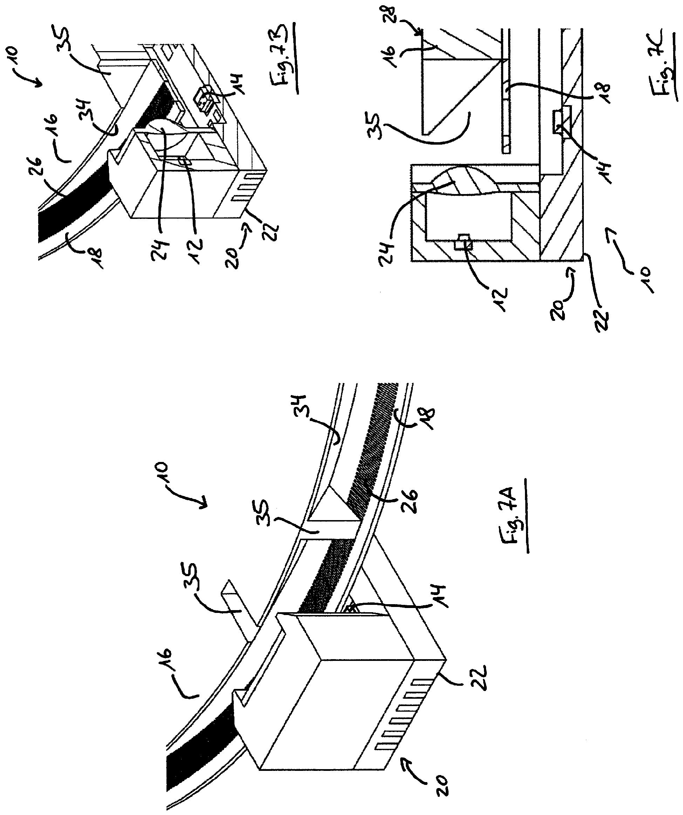

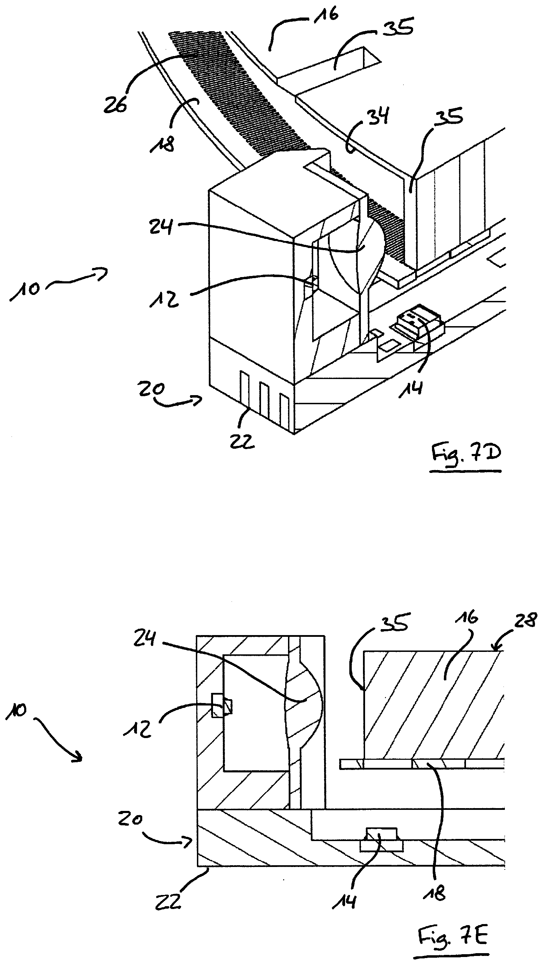

Zu den Fig. 1A bis 4C und Fig. 6A bis 6D ist noch anzumerken, dass auch eine Ausführungsform möglich ist, bei der lediglich eine einzige Sendeachse S und eine einzige Empfangsachse E für einen einzigen Empfänger 14 vorgesehen sind. Gleichwohl kann auch bei einer solchen Ausführungsform ein sogenanntes Indexsignal erzeugt werden. Ein Abschnitt einer derartigen Ausführungsform eines optischen Encoders 10 ist in den Fig. 7A bis 7E in drei perspektivischen Ansichten und zwei Querschnittsansichten gezeigt, wobei die Fig. 7A bis 7C den optischen Encoder 10 bei einem ersten Drehwinkel des Reflektors 16 und die Fig. 7D und 7E den optischen Encoder 10 bei einem zweiten Drehwinkel des Reflektors 16 zeigen. Die Anordnung von Sender 12, Reflektor 16 und Codeträger 18 entspricht der Anordnung der Ausführungsform der Fig. 1, d.h. der Reflektor 16 und der Codeträger 18 bilden eine gemeinsame Baueinheit, welche um die Drehachse D drehbar gelagert ist. In der Ausführungsform der Fig. 7 wird ein Indexsignal dadurch erzeugt, dass der Reflektor 16 in Umfangsrichtung benachbart zu einem oder mehreren Reflexionsabschnitt(en) 34, der/die sich insbesondere über weite Umfangsbereiche erstrecken kann/können, wenigstens einen Unterbrechungsabschnitt 35 aufweist, der die elektromagnetische Strahlung bezüglich der Beaufschlagung des Empfängers 14 unterbricht und hierdurch indirekt einen zusätzlichen Codeabschnitt bildet, der jedoch von dem Codeträger 18 getrennt und unabhängig ist. Insbesondere kann der jeweilige Unterbrechungsabschnitt 35 sich über einen (unterscheidbar) größeren Umfangswinkel erstrecken als der breiteste strahlungsabsorbierende Codeabschnitt 26 des Codeträgers 18. Sofern sich hingegen ein die elektromagnetische Strahlung reflektierender Reflexionsabschnitt 34 im Strahlengang befindet, wird die ausgesendete elektromagnetische Strahlung in Richtung des Empfängers 14 umgelenkt, wobei eine Modulation mittels der Codeabschnitte 26 des Codeträgers 18 erfolgen kann. Eine gegenüber den Reflexionsabschnitten 34 radial oder axial versetzte weitere Abfolge von (einem oder mehreren) Reflexionsabschnitt(en) 36 ist bei dieser Ausführungsform nicht erforderlich.

In der gezeigten Ausführungsform weist der Reflektor 16 beispielhaft zwei verschiedene Unterbrechungsabschnitte 35 auf (Vertiefung mit Planfläche bzw. Erhebung mit Planfläche), die bei den in Fig. 7 dargestellten Drehwinkeln des Reflektors 16 sich jeweils im Strahlengang befinden und die elektromagnetische Strahlung unterbrechen. Generell ist jedoch auch eine Ausführungsform mit lediglich einem einzigen Unterbrechungsabschnitt 35 möglich, oder es können auch mehrere gleichartige Unterbrechungsabschnitte 35 vorgesehen sein, insbesondere mit derselben Breite (Umfangswinkel) oder mit unterschiedlicher Breite (zur gegenseitigen Unterscheidbarkeit). Der jeweilige Unterbrechungsabschnitt 35 kann eine Unterbrechung der Beaufschlagung des Empfängers 14 mit der ausgesendeten elektromagnetischen Strahlung beispielsweise durch Absorption der elektromagnetischen Strahlung bewirken, oder durch Umlenkung in eine andere Richtung als jene, die zu dem Empfänger 14 führt. Insbesondere kann der jeweilige Unterbrechungsabschnitt 35 hierfür entsprechend geformt, beschichtet und/oder oberflächenstrukturiert sein.

Sofern, wie in Fig. 7A bis 7E gezeigt, zwei Unterbrechungsabschnitte 35 vorgesehen sind, kann aus der bekannten jeweiligen Breite (Umfangswinkel) der Unterbrechungsabschnitte 35 und aus dem bekannten Abstand der Unterbrechungsabschnitte 35 das Indexsignal besonders zuverlässig erzeugt werden.

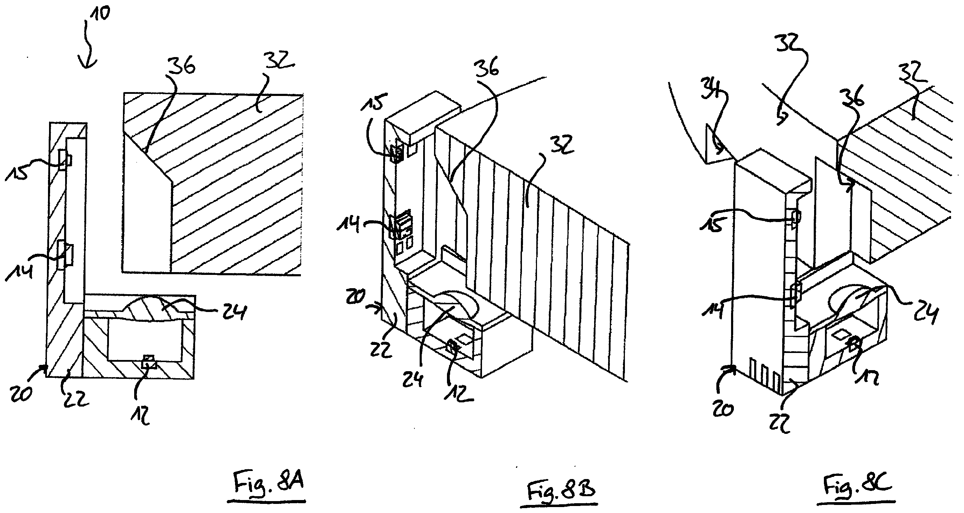

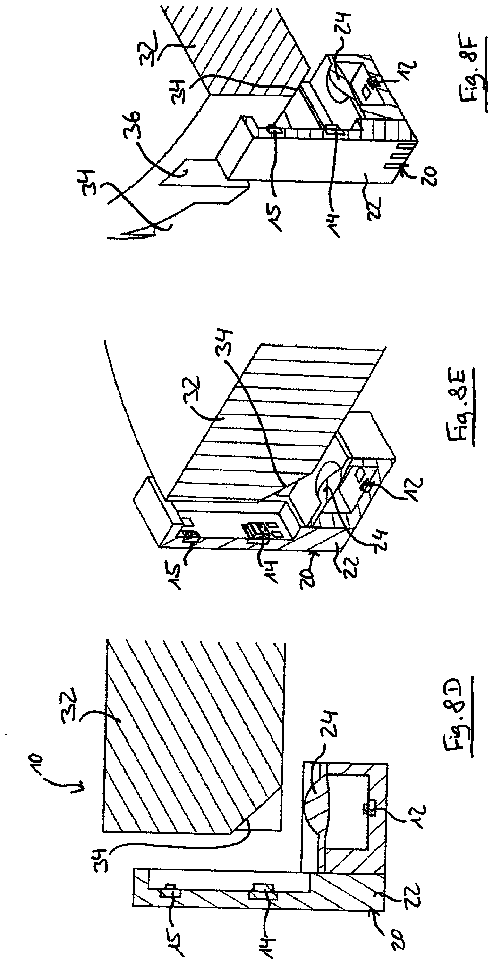

Fig. 8A bis 8F zeigen Querschnittsansichten (Fig. 8A, 8D) und vier perspektivische Ansichten (Fig. 8B, 8C, 8E, 8F) eines Abschnitts einer Variante der nicht beanspruchten Ausführungsform von Fig. 6A (Sendeachse S verläuft orthogonal zu der Bewegungsebene des Codeträgers 18, also in vertikaler Richtung). Dabei zeigen die Fig. 8A bis 8C und die Fig. 8D bis 8F den optischen Encoder 10 bei zwei unterschiedlichen Drehwinkeln des Reflektors 32, die zu jeweils unterschiedlichen Beaufschlagungen des ersten und zweiten Empfängers 14 und 15 führen. Der Reflektor 32 weist eine weitere Abfolge von Reflexionsabschnitten 36 auf, welche bezüglich der Drehachse des Reflektors 32 axial versetzt zu der Abfolge von Reflexionsabschnitten 34 angeordnet ist. Dabei wird elektromagnetische Strahlung, welche auf den Reflexionsabschnitt 36 trifft, in Richtung der zweiten Empfangsachse E' des zweiten Empfängers 15 abgelenkt, um diesen zu beaufschlagen und ein Signal zu erzeugen (Fig. 8A bis 8C). Trifft elektromagnetische Strahlung hingegen auf einen der Reflexionsabschnitte 34, so wird sie in Richtung der Empfangsachse E des Empfängers 14 abgelenkt, um dort ein Signal zu erzeugen (Fig. 8D bis 8F). Diese Ausführungsform bietet eine zuverlässige, robuste und stabile Alternative, um Messungen durchzuführen, die nur eine geringe Auflösung benötigen.

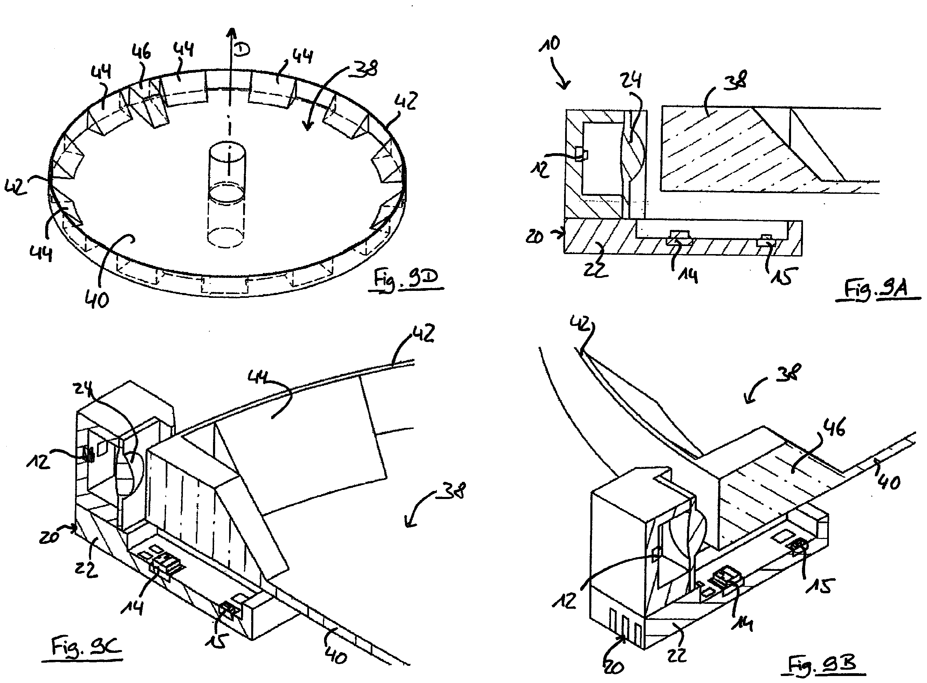

Fig. 9A bis 9C zeigen eine Querschnittsansicht (Fig. 9A) und zwei perspektivische Ansichten (Fig. 9B und 9C) eines Abschnitts einer weiteren nicht beanspruchten Ausführungsform eines optischen Encoders 10, bei der die Strahlumlenkung auf Totalreflexion beruht. Die Anordnung von Sender 12, erstem Empfänger 14 und zweitem Empfänger 15 entspricht der der Ausführungsform von Fig. 1A bzw. Fig. 6A (Sendeachse S verläuft parallel zu der Bewegungsebene des Codeträgers 18, also in horizontaler Richtung). Des Weiteren zeigt Fig. 9D den Reflektor 38 der Ausführungsform der Fig. 9A bis 9C. Der Reflektor 38 ist als im Wesentlichen kreisscheibenförmige Platte 40 ausgeführt, aus der an ihrem äußeren Rand umfänglich ein Ring 42 aus transparentem Material herausragt. An der Innenseite des Rings 42 ist in regelmäßigem Abstand eine Mehrzahl von Prismen 44 angeordnet, die ebenso aus transparentem Material gebildet sind und mit einer Innenseite des Rings 42 jeweils formschlüssig verbunden sind.

Die Abfolge von gleichförmigen Prismen 44 bildet nun eine Abfolge von Reflexionsabschnitten, wobei elektromagnetische Strahlung an abgeschrägten, der Drehachse D zugewandten Flächen der Prismen 44 totalreflektiert wird. Die Abfolge von Prismen 44 bzw. Reflexionsabschnitten dient auch bei dieser Ausführungsform zugleich als Abfolge von Codeabschnitten mit verhältnismäßig geringer Auflösung, d.h. der Codeträger ist in die Ausbildung des Reflektors 38 integriert. In der gezeigten Ausführungsform weist der Reflektor 38 eine weitere Abfolge von Reflexionsabschnitten auf, welche durch ein einzelnes Prisma 46 gebildet wird. Das Prisma 46 ist derart ausgebildet, dass nur eine Totalreflexion an dem Prisma 46 zu einer Beaufschlagung des zweiten Empfängers 15 mit elektromagnetischer Strahlung führt.

Auch bei den Ausführungsformen gemäß Fig. 6, 7, 8 und 9 ist eine axiale Montage des Codeträgers bzw. des Reflektors 32, 38 mit Codeträger möglich (d.h. Montage entlang der Drehachse).

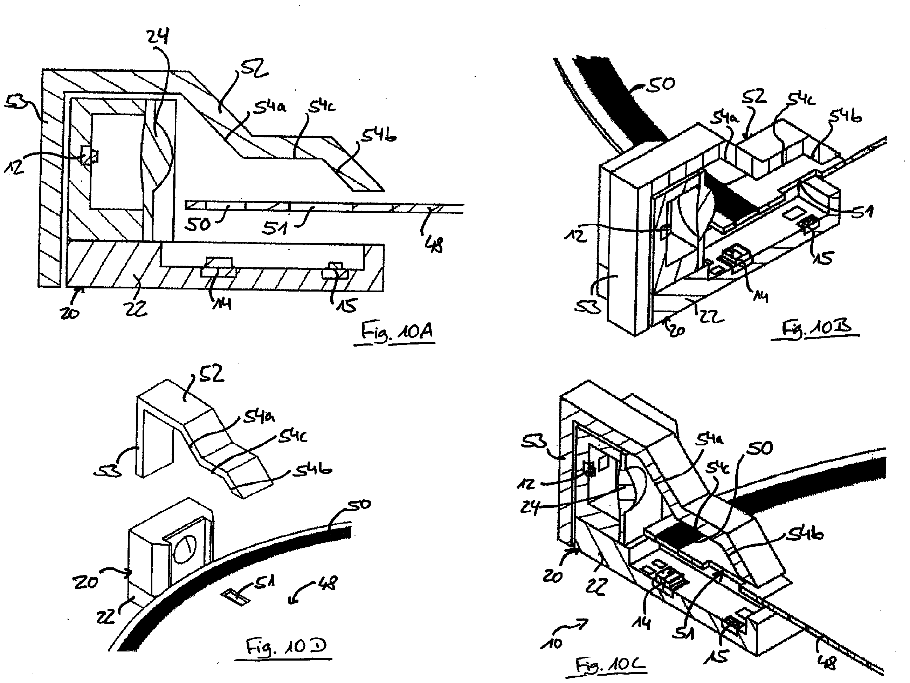

Fig. 10A bis 10C zeigen eine Querschnittansicht (Fig. 10A) und zwei perspektivische Ansichten (Fig. 10B und 10C) eines Abschnitts einer weiteren nicht beanspruchten Ausführungsform des erfindungsgemäßen optischen Encoders 10. Die Anordnung von Sender 12, erstem Empfänger 14 und zweitem Empfänger 15 in der Sende- und Empfangsvorrichtung 20 entspricht der Anordnung der beispielsweise in Fig. 1A und Fig. 2A bis 2D gezeigten Ausführungsformen. Hingegen sind Codeträger und Reflektor bei der Ausführungsform der Fig. 10A und 10B nicht mehr in einer Baueinheit vereint, sondern bilden eine separate Baueinheit.

Ähnlich wie in den Ausführungsform der Fig. 1A und 2 ist der Codeträger 48 als dünne Codescheibe ausgebildet, die einen kreisförmigen Umriss aufweist, um eine nicht gezeigte Drehachse drehbar gelagert ist und im Wesentlichen senkrecht zu der Empfangsachse E des Empfängers 14 ausgerichtet ist. Der Codeträger 48 weist eine Abfolge von Codeabschnitten 50 auf, die beispielsweise wieder als längliche Schlitze ausgebildet sein können, welche sich in radialer Richtung des Codeträgers 48 erstrecken und beispielsweise durch Fräsen, Stanzen oder Laserschneiden gebildet sein können. Neben der Abfolge von Codeabschnitten 50 weist der Codeträger 48 eine zweite Abfolge von Codeabschnitten 51 auf, welche radial versetzt zu der Abfolge von Codeabschnitten 50 ausgebildet ist. In der gezeigten Ausführungsform umfasst die zweite Abfolge von Codeabschnitten 51 ein einziges strahlungsdurchlässiges Codeelement 51 in Form einer Ausnehmung, welches den zweiten Empfänger 15 für eine Beaufschlagung mit elektromagnetischer Strahlung freigibt.

Dagegen ist der Reflektor 52 als unbewegliche separate Baueinheit ausgebildet, welche mittels einer Halterung 53 in einer Position oberhalb des Codeträgers 48 gehalten wird. Der Reflektor 52 weist zwei bezüglich der Drehachse des Codeträgers 48 schräg geneigte Reflexionsabschnitte 54a, 54b auf, welche entlang der Sendeachse S ausgesendete elektromagnetische Strahlung in Richtung der Empfangsachsen E und E' des ersten und zweiten Empfängers 14 und 15 reflektieren.

Die schräg geneigten Reflexionsabschnitte 54a, 54b sind bezüglich der Drehachse des Codeträgers 48 axial und radial versetzt zueinander angeordnet und durch einen, hier horizontal ausgebildeten, Verbindungsabschnitt 54c miteinander verbunden. Somit weist der untere Reflexionsabschnitt 54b relativ zu dem oberen Reflexionsabschnitt 54a einen radialen Versatz in Richtung der Drehachse D auf. Des Weiteren weisen die Reflexionsabschnitte 54a und 54b identische Ausrichtungswinkel relativ zu der Sendeachse S auf. In anderen Ausführungsformen können besagte Ausrichtungswinkel jedoch auch unterschiedliche Werte einnehmen.

Der Reflektor 52 kann beispielsweise aus opakem Kunststoff bestehen und an den Reflexionsabschnitten 54a und 54b eine reflektierende Beschichtung aufweisen. Denkbar ist auch, dass (bei angepasster Formgebung) der Reflektor 52 aus transparentem Kunststoff gefertigt ist und die vom Sender 12 ausgesendete elektromagnetische Strahlung in Richtung des Codeträgers 48 und des ersten und zweiten Empfängers 14 und 15 total reflektiert wird. In der gezeigten Ausführungsform ist der Reflektor 52 als Teil der Sende- und Empfangsvorrichtung 20 des optischen Encoders 10 ausgebildet. Der Reflektor 52 kann jedoch auch als separate Baueinheit vorliegen und unabhängig von der Sende- und Empfangsvorrichtung 20 unbeweglich montiert werden. Fig. 10D illustriert in einer perspektivischen Ansicht, dass der Reflektor 52 auch erst zu einem Zeitpunkt montiert werden kann, zu dem die Sende- und Empfangsvorrichtung 20 und der Codeträger 48 bereits montiert worden sind.

Alternativ kann der Codeträger 48, wie bereits erläutert, einen Umfangsausschnitt aufweisen, um eine axiale Montage entlang seiner Drehachse zu ermöglichen.

Durch eine invertierte Montage der Sende- und Empfangsvorrichtung 20 und dem damit einhergehenden Austausch der Positionen von Sender 12 einerseits und erstem und zweitem Empfänger 14, 15 andererseits lässt sich die Ausführungsform der Fig. 10A bis 10D auch in einer Ausrichtung realisieren, bei der die Sendeachse S (wie in Fig. 2B gezeigt) senkrecht zu der Erstreckungs- bzw. Bewegungsebene des Codeträgers 48 ausgerichtet ist.

Abweichend von den vorstehend erläuterten Ausführungsformen können auch mehrere Sender 12 vorgesehen sein, insbesondere ein separater Sender 12 für jede Abfolge von Codeabschnitten 26 und/oder ein separater Sender 12 für jeden Empfänger 14, 15. Jeder der separaten Sender 12 kann einen eigenen Kollimator 24 aufweisen, oder es kann ein gemeinsamer Kollimator 24 vorgesehen sein.

Die vorstehend erläuterten Ausführungsformen illustrieren einen Ausrichtungswinkel zwischen Sendeachse S und Empfangsachse E, E', der den Wert 90 Grad aufweist. Hierdurch ergibt sich ein einfacher Aufbau. Allerdings können je nach Anwendung und Einbauumgebung auch andere Werte des Ausrichtungswinkels zwischen Sendeachse S und Empfangsachse E, E' vorgesehen sein, insbesondere größere Werte (z.B. 120 Grad oder 150 Grad), um eine flachere Anordnung von Sender 12 und Empfänger 14, 15 zu ermöglichen, oder geringere Werte (z.B. 60 Grad oder 30 Grad), um eine näher zueinander benachbarte Anordnung von Sender 12 und Empfänger 14, 15 zu ermöglichen. Die Ausrichtung des jeweiligen Reflektors 16, 32, 38, 52 muss entsprechend angepasst werden (bei einem spiegelnden Reflektor insbesondere auf die Hälfte des Ausrichtungswinkels zwischen Sendeachse S und Empfangsachse E, E').

### Bezugszeichenliste

- 10: optischer Encoder
- 12: Sender
- 14: Empfänger
- 15: zweiter Empfänger
- 16: Reflektor
- 18: Codeträger
- 20: Sende- und Empfangsvorrichtung
- 22: Trägerbauteil
- 24: Kollimator
- 26: Codeabschnitt
- 27: Codeabschnitt
- 28: Haupterstreckungsebene
- 30a: Reflexionsabschnitt
- 30b: Reflexionsabschnitt
- 30c: Verbindungsabschnitt
- 31: Reflexionsabschnitt
- 32: Reflektor mit Codeträger
- 34: Reflexionsabschnitt bzw. reflektierender Codeabschnitt
- 35: Unterbrechungsabschnitt
- 36: Reflexionsabschnitt
- 38: Reflektor
- 40: kreisscheibenförmige Platte
- 42: transparenter Ring
- 44: Prisma
- 46: Prisma
- 48: Codeträger
- 50: Codeabschnitt
- 51: Codeabschnitt
- 52: Reflektor
- 53: Halterung
- 54a: Reflexionsabschnitt
- 54b: Reflexionsabschnitt
- 54c: Verbindungsabschnitt
- 56: Empfangselement

- S: Sendeachse
- E, E': Empfangsachse
- D: Drehachse

## Patentansprüche

1. Optischer Encoder (10), umfassend einen Sender (12), einen Empfänger (14), einen Reflektor (16) und einen Codeträger (18),
wobei der Sender (12) elektromagnetische Strahlung entlang einer Sendeachse (S) in Richtung des Reflektors (16) aussendet,
wobei der Reflektor (16) wenigstens einen Reflexionsabschnitt (30a, 30b) aufweist, der die elektromagnetische Strahlung entlang einer Empfangsachse (E) in Richtung des Empfängers (14) umlenkt, wobei der Reflektor (16) als drehbare Scheibe ausgebildet ist, welche um eine Drehachse (D) drehbar gelagert ist, wobei der Codeträger (18) beweglich gelagert ist und eine Abfolge von Codeabschnitten (26) aufweist, um die ausgesendete elektromagnetische Strahlung in Abhängigkeit von der Position des Codeträgers (18) zu unterbrechen oder für eine Beaufschlagung des Empfängers (14) freizugeben,
wobei die Sendeachse (S) und die Empfangsachse (E) in einem Ausrichtungswinkel zueinander verlaufen, der einen Wert im Bereich von 30 Grad bis 150 Grad aufweist,
wobei der wenigstens eine Reflexionsabschnitt (30a, 30b) des Reflektors (16) an einem bezüglich der Drehachse (D) schräg geneigten Umfang der drehbaren Scheibe angeordnet ist,
**dadurch gekennzeichnet, dass** der Codeträger (18) separat von dem Reflektor (16) als flache Codescheibe ausgebildet ist, welche mit dem Reflektor (16) fest verbunden ist und sich entlang einer Normalebene zu der Drehachse (D) erstreckt, wobei der Codeträger (18) in einem radialen Abstand zu der Drehachse (D) zumindest eine kreisringförmige Codespur (25) aufweist, welche die Abfolge von Codeabschnitten (26) aufweist, wobei die Abfolge von Codeabschnitten (26) abwechselnd strahlungsabsorbierend oder strahlungsdurchlässig ausgebildet ist.

2. Optischer Encoder (10) nach Anspruch 1,
wobei der Ausrichtungswinkel zwischen der Sendeachse (S) und der Empfangsachse (E) 90 Grad beträgt.

3. Optischer Encoder (10) nach einem der vorhergehenden Ansprüche, wobei der wenigstens eine Reflexionsabschnitt (30a, 30b) des Reflektors (16) schräg zu der Sendeachse (S) und zu der Empfangsachse (E) ausgerichtet ist, insbesondere in einem jeweiligen Winkel von 45 Grad.

4. Optischer Encoder (10) nach einem der vorhergehenden Ansprüche, wobei die Abfolge von Codeabschnitten (26) derart an dem Codeträger (18) angeordnet ist, dass die elektromagnetische Strahlung senkrecht oder im Wesentlichen senkrecht auf die Abfolge von Codeabschnitten (26) trifft.

5. Optischer Encoder (10) nach einem der vorhergehenden Ansprüche, wobei wenigstens ein Unterbrechungsabschnitt (35) des Reflektors (16), der benachbart zu dem wenigstens einen Reflexionsabschnitt (30a, 30b) angeordnet ist und die ausgesendete elektromagnetische Strahlung unterbricht, einen zusätzlichen Codeabschnitt bildet.

6. Optischer Encoder (10) nach einem der vorhergehenden Ansprüche, wobei der Reflektor (16) eine Abfolge von mehreren Reflexionsabschnitten (30a, 30b) aufweist.

7. Optischer Encoder (10) nach einem der vorhergehenden Ansprüche, wobei der Codeträger (18) mehrere Abfolgen von Codeabschnitten (26) aufweist, wobei die mehreren Abfolgen mehrere nebeneinander liegende Codespuren bilden.

## Claims

1. An optical encoder (10) comprising an emitter (12); a receiver (14); a reflector (16); and a code carrier (18),
wherein the emitter (12) emits electromagnetic radiation along an emission axis (S) in the direction of the reflector (16);
wherein the reflector (16) has at least one reflection section (30a, 30b) which deflects the electromagnetic radiation along a reception axis (E) in the direction of the receiver (14); wherein the reflector (16) is configured as a rotatable disk which is rotatably supported about an axis of rotation (D);
wherein the code carrier (18) is movably supported and has a sequence of code sections (26) to interrupt the emitted electromagnetic radiation or to give way for the emitted electromagnetic radiation to impinge on the receiver (14) in dependence on the position of the code carrier (18); wherein the emission axis (S) and the reception axis (E) extend at an alignment angle with respect to one another that has a value in the range from 30 degrees to 150 degrees;
wherein the at least one reflection section (30a, 30b) of the reflector (16) is arranged at a periphery of the rotatable disk that is inclined obliquely with respect to the axis of rotation (D),
**characterized in that** the code carrier (18) is configured as a flat code disk separately from the reflector (16), said flat code disk being fixedly connected to the reflector (16) and extending along a normal plane to the axis of rotation (D), with the code carrier (18) having at least one circular ring-shaped code track (25), which has the sequence of code sections (26), at a radial spacing from the axis of rotation (D), and with the sequence of code sections (26) being alternately configured as absorbing radiation or as transmitting radiation.

2. An optical encoder (10) in accordance with claim 1,
wherein the alignment angle between the emission axis (S) and the reception axis (E) amounts to 90 degrees.

3. An optical encoder (10) in accordance with one of the preceding claims, wherein the at least one reflection section (30a, 30b) of the reflector (16) is aligned obliquely to the emission axis (S) and to the reception axis (E), in particular at a respective angle of 45 degrees.

4. An optical encoder (10) in accordance with any one of the preceding claims, wherein the sequence of code sections (26) is arranged at the code carrier (18) such that the electromagnetic radiation is incident onto the sequence of code sections (26) in a perpendicular or substantially perpendicular manner.

5. An optical encoder (10) in accordance with any one of the preceding claims, wherein at least one interruption section (35) of the reflector (16), which is arranged adjacent to the at least one reflection section (30a, 30b) and which interrupts the emitted electromagnetic radiation, forms an additional code section.

6. An optical encoder (10) in accordance with any one of the preceding claims, wherein the reflector (16) has a sequence of a plurality of reflection sections (30a, 30b).

7. An optical encoder (10) in accordance with any one of the preceding claims, wherein the code carrier (18) has a plurality of sequences of code sections (26), with the plurality of sequences forming a plurality of code tracks disposed next to one another.

## Revendications

1. Codeur optique (10), comprenant un émetteur (12), un récepteur (14), un réflecteur (16) et un support de code (18),
dans lequel l'émetteur (12) émet un rayonnement électromagnétique le long d'un axe d'émission (S) en direction du réflecteur (16),
dans lequel le réflecteur (16) présente au moins une section de réflexion (30a, 30b) qui dévie le rayonnement électromagnétique le long d'un axe de réception (E) en direction du récepteur (14), le réflecteur (16) étant réalisé sous la forme d'un disque rotatif qui est monté de manière à pouvoir tourner autour d'un axe de rotation (D), le support de code (18) étant monté de manière mobile et présentant une suite de sections de code (26) pour interrompre le rayonnement électromagnétique émis en fonction de la position du support de code (18) ou pour le libérer afin d'exposer le récepteur (14),
dans lequel l'axe d'émission (5) et l'axe de réception (E) s'étendent l'un par rapport à l'autre selon un angle d'orientation qui présente une valeur dans la plage de 30 degrés à 150 degrés,
dans lequel ladite au moins une section de réflexion (30a, 30b) du réflecteur (16) est disposée sur une périphérie du disque rotatif inclinée obliquement par rapport à l'axe de rotation (D),
**caractérisé en ce que**
le support de code (18) est réalisé séparément du réflecteur (16) sous la forme d'un disque de code plat qui est relié de manière fixe au réflecteur (16) et qui s'étend le long d'un plan normal à l'axe de rotation (D), dans lequel le support de code (18) présente, à une distance radiale de l'axe de rotation (D), au moins une piste de code (25) en forme d'anneau de cercle, qui présente la suite de sections de code (26), dans lequel la suite de sections de code (26) est réalisée de manière à absorber le rayonnement ou à laisser passer le rayonnement en alternance.

2. Codeur optique (10) selon la revendication 1,
dans lequel l'angle d'orientation entre l'axe d'émission (S) et l'axe de réception (E) est de 90 degrés.

3. Codeur optique (10) selon l'une des revendications précédentes,
dans lequel ladite au moins une section de réflexion (30a, 30b) du réflecteur (16) est orientée obliquement par rapport à l'axe d'émission (S) et à l'axe de réception (E), en particulier selon un angle respectif de 45 degrés.

4. Codeur optique (10) selon l'une des revendications précédentes,
dans lequel la suite de sections de code (26) est disposée sur le support de code (18) de manière à ce que le rayonnement électromagnétique arrive perpendiculairement ou sensiblement perpendiculairement sur la suite de sections de code (26).

5. Codeur optique (10) selon l'une des revendications précédentes,
dans lequel au moins une section d'interruption (35) du réflecteur (16), disposée au voisinage de ladite au moins une section de réflexion (30a, 30b) et interrompant le rayonnement électromagnétique émis, forme une section de code supplémentaire.

6. Codeur optique (10) selon l'une des revendications précédentes,
dans lequel le réflecteur (16) présente une suite de plusieurs sections de réflexion (30a, 30b).

7. Codeur optique (10) selon l'une des revendications précédentes,
dans lequel le support de code (18) présente plusieurs suites de sections de code (26), lesdites plusieurs suites formant plusieurs pistes de code juxtaposées.
